# FASCICULE DE BREVET EUROPEEN

(11) **EP 0 501 843 B1**
(45) Date de publication et mention de la délivrance du brevet: **22.06.1994**
(21) Numéro de dépôt: 92400236.3
(22) Date de dépôt: 30.01.1992
(51) Int. Cl.: B60T 13/52

(54) **Servomoteur d'assistance au freinage à saut réglable et procédé de réglage du saut**
Bremskraftverstärker mit einstellbarem Schwellenwert und Verfahren zum Regeln des Schwellenwertes
Servo brake booster with an adjustable threshold value and procedure for regulating same

(30) Priorité: 28.02.1991 FR 9102390
(43) Date de publication de la demande: 02.09.1992
(73) Titulaire: ALLIEDSIGNAL EUROPE SERVICES TECHNIQUES, 93700 Drancy (FR)
(72) Inventeur: Levrai, Roland, Bendix Europe Services Techniques, F-93700 Drancy (FR); Castel, Philippe, Bendix Europe Services Techn., F-93700 Drancy (FR)
(74) Mandataire: Bentz, Jean-Paul

(56) Documents cités:
- EP-A- 0 220 987
- FR-A- 2 480 898
- FR-A- 2 617 451

## Description

L'invention concerne les servomoteurs d'assistance au freinage et s'applique plus particulièrement au réglage du saut de tels servomoteurs.

Un servomoteur d'assistance au freinage comprend généralement une tige de commande qui se déplace vers l'avant lorsque le conducteur du véhicule actionne la pédale de frein. Ce déplacement de la tige de commande est transmis à un plongeur qui actionne des moyens d'assistance. Généralement, ces moyens d'assistance comprennent une valve à trois voies et deux sièges dont l'actionnement permet d'interrompre la communication entre une chambre avant et une chambre arrière du servomoteur et de mettre cette dernière chambre à l'atmosphère. Etant donné que la chambre avant est normalement sous vide, une force d'assistance est ainsi exercée sur le piston qui sépare les deux chambres. Le piston se déplace alors vers l'avant en agissant sur une tige de poussée servant à actionner le maître-cylindre du circuit de freinage.

Le piston servant à transmettre la force d'assistance à la tige de poussée agit sur cette dernière au travers d'un disque de réaction réalisé en un matériau déformable tel qu'un élastomère. Au repos, un faible jeu existe entre l'extrémité avant du plongeur et le disque de réaction. Lorsque le conducteur du véhicule commence à actionner la pédale de frein, ce faible jeu permet au plongeur de se déplacer immédiatement vers l'avant pour commander les moyens d'assistance et assurer une réponse immédiate des freins.

La transmission à la tige de poussée, au travers du disque de réaction, de la force d'assistance exercée sur le piston a pour effet de comprimer axialement la partie périphérique du disque de réaction proportionnellement à la force d'assistance. Cette compression de la partie périphérique du disque de réaction a pour conséquence une déformation de la partie centrale de ce disque vers la face avant du plongeur. Lorsque la force d'assistance dépasse un certain seuil, le jeu existant initialement au repos entre le disque de réaction et la face avant du plongeur est rattrapé, de sorte que le plongeur est en contact avec le disque de réaction et que ce dernier renvoie vers la pédale de frein une force de réaction représentative de l'effort de freinage appliqué sur les freins du véhicule. Cet agencement bien connu permet au conducteur de doser l'effort de freinage qu'il exerce sur la pédale en fonction de la résistance qu'il rencontre, qui augmente avec cet effort.

Il ressort de l'explication qui précède que la réaction à la pédale ne commence à apparaître que lorsque la force d'assistance engendrée par l'actionnement de la pédale de frein dépasse un certain seuil. Ce seuil est appelé le "saut" du servomoteur. Il constitue une caractéristique importante du servomoteur. En effet, si l'existence du saut est imposée pour une réponse immédiate des freins lors d'un actionnement de la pédale, les constructeurs de véhicules automobiles souhaitent généralement que la valeur de ce saut reste dans certaines limites pour que l'assistance n'atteigne pas une valeur trop grande sans augmentation de la réaction à la pédale.

Cependant, compte tenu notamment des tolérances de fabrication des différentes pièces constituant le servomoteur, il peut exister des différences importantes dans la valeur du saut, d'un servomoteur à un autre. De même, les maîtres-cylindres destinés à être actionnés par la tige de poussée du servomoteur souffrent eux aussi d'une dispersion de leurs caractéristiques, si bien que les performances d'un ensemble servo-frein-maître-cylindre peuvent varier dans une plage exagérément étendue. De plus, il n'existe actuellement aucun moyen pratique pour maîtriser ou régler la valeur du saut du servomoteur, de sorte que les exigences précédemment mentionnées ne sont pas toujours satisfaites, sauf en se livrant à des contrôles complexes et onéreux.

Le document FR-A-2 480 898 propose un procédé de réglage de la valeur du saut de chaque servomoteur. Ce procédé, qui est coûteux, doit être mise en oeuvre avant assemblage du servomoteur et, de ce fait, ne peut pas tenir compte des tolérances de fabrication des différentes pièces constituant le servomoteur.

La présente invention a pour but de pallier les inconvénients précités avec un servomoteur dont le réglage du saut peut être effectué après assemblage complet du servomoteur.

L'invention a également pour but un tel procédé de réglage du saut.

L'invention s'applique donc à un servomoteur pneumatique d'assistance au freinage comportant en série une tige de commande rendue substantiellement solidaire d'un plongeur par un moyen de pivot, un disque de réaction et une tige de poussée, la tige de commande actionnant une valve à trois voies et deux sièges, un espace étant ménagé au repos entre le disque de réaction et le plongeur pour déterminer le saut.

Selon l'invention, l'un des deux sièges de la valve est constitué par un manchon coaxial au plongeur, un moyen compressible précontraint tendant à écarter l'un de l'autre axialement manchon et plongeur, le manchon venant axialement en butée sur une pièce rendue solidaire de la tige de commande après ajustage des positions relatives.

L'invention sera mieux comprise et d'autres buts, avantages et caractéristiques de celle-ci apparaîtront plus clairement à la lecture de la description qui suit d'un mode de réalisation donné à titre non limitatif en référence aux dessins annexés sur lesquels :
- La Figure 1 représente schématiquement en coupe un servomoteur pneumatique conforme à l'invention, et
- La Figure 2 représente une variante du mode de réalisation de la Figure 1.

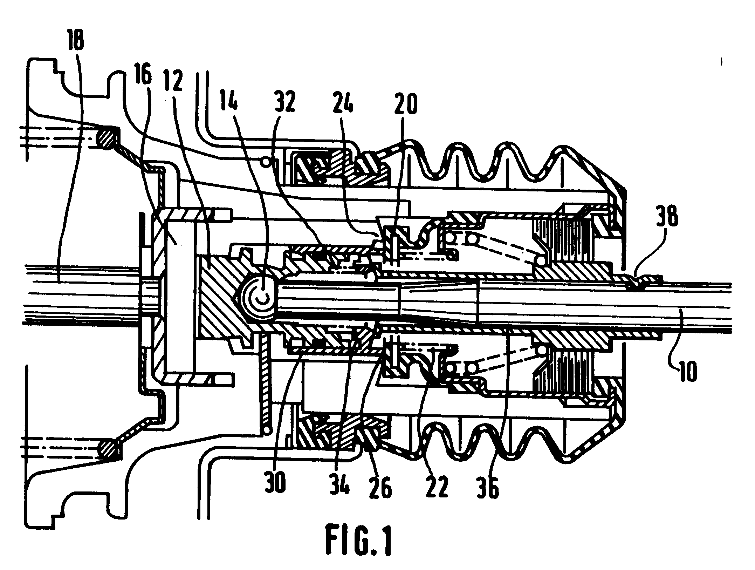

En référence maintenant à la Figure 1, l'homme du métier reconnaîtra la tige de commande 10 actionnée par une pédale (non représentée). Cette tige de commande 10 est solidarisée à un plongeur 12 par un moyen de pivot 14 permettant un certain désaxage de la tige de commande 10.

Le plongeur 12 est situé en regard d'une face du disque de réaction 16 sur l'autre face duquel est appliquée la tige de poussée 18 actionnant le piston du maître-cylindre (non représenté). Le saut est déterminé par l'espace ménagé entre le disque de réaction 16 et l'extrémité en regard du plongeur 12.

De façon conventionnelle, le servomoteur comporte une valve à trois voies et deux sièges constituée par une membrane 20 sur laquelle appuie un ressort 22, et deux sièges.

Le premier siège 24, lorsque la membrane 20 y repose, interrompt une communication entre une chambre avant du servomoteur reliée en permanence à une source de dépression, et une chambre arrière.

Le second siège 26, lorsque la membrane 20 y repose, interrompt une communication entre l'air ambiant et la chambre arrière. Le fonctionnement de la valve est bien connu et ne sera pas repris en détail ici.

Selon le mode de réalisation de la Figure 1, ce second siège 26 est constitué par l'extrémité d'un manchon cylindrique 30 disposé autour du plongeur 12. Un ressort 32 tend à écarter l'un de l'autre manchon 30 et plongeur 12. Ce ressort peut être remplacé par un anneau en matériau plastique ayant la même fonction.

Le manchon 30 vient en butée axialement par un ergot 34 sur une extrémité d'une pièce sensiblement cylindrique 36 rendue solidaire de la tige de commande 10 après ajustage des positions relatives des composants.

Cet ergot 34 et l'extrémité de la pièce 36 affectent une forme partiellement sphérique sensiblement de même centre que celui des moyens de pivot 14 pour favoriser la possibilité de désaxage précité de la tige de commande 10.

Le réglage du saut souhaité est obtenu de la façon suivante.

Dans un premier temps, les composants du servomoteur sont assemblés, mais la tige de commande 10 n'est pas rendue solidaire de la pièce 36. De ce fait, le plongeur 12 et le manchon 30 peuvent coulisser axialement l'un par rapport à l'autre sous l'effet du ressort 32.

On place alors les deux sièges 24, 26 de valve dans un même plan radial par déplacement axial de la pièce 36, dont on fixe alors la position par rapport au corps du servomoteur.

Ensuite par déplacement axial de la tige de commande 10, on peut ajuster l'espace ménagé entre le disque de réaction 16 et le plongeur 12, c'est-à-dire le saut du servomoteur. Lorsque le saut souhaité est obtenu, on solidarise la pièce 36 et la tige de commande 10 par un moyen quelconque tel un sertissage 38. Le ressort 32 n'a alors plus aucun effet. On a obtenu ainsi un réglage précis du saut après assemblage du servomoteur, sans qu'il ait été nécessaire de prévoir des moyens complexes et coûteux. En outre, l'ajustage du saut est réalisé de façon unitaire, c'est-à-dire que le saut obtenu est totalement indépendant de toutes les tolérances de fabrication du servomoteur. Enfin, ce réglage est fait de l'extérieur du servomoteur et n'en nécessite pas le démontage.

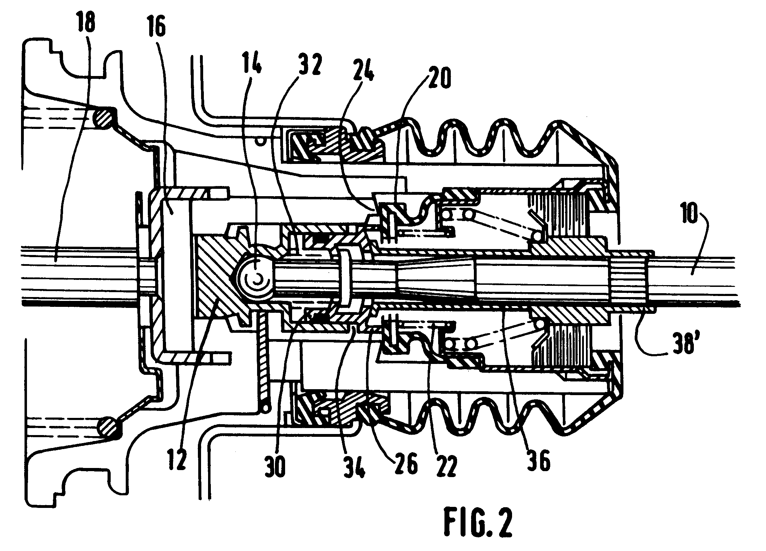

On a représenté sur la Figure 2 une variante du mode de réalisation qui vient d'être décrit. Sur cette Figure 2, les éléments identiques ou analogues à ceux de la Figure 1 portent les mêmes numéros de référence. On voit sur la Figure 2 que le second siège de valve 26 est constitué par l'extrémité d'un manchon cylindrique 30 disposé à l'intérieur du plongeur 12, le ressort 32 tendant à les écarter l'un de l'autre, pour faire coopérer la surface 34 du manchon 30 avec l'extrémité de la pièce 36 de forme partiellement sphérique comme précédemment. Le règlage du saut du servomoteur de la Figure 2 est obtenu de façon identique à celui de la Figure 1.

Bien évidemment, l'homme du métier pourra apporter à l'invention de nombreux changements sans sortir du cadre défini par les revendications annexées.

C'est ainsi que, comme représenté par exemple sur la figure 2, on pourra prévoir d'emmancher la pièce 36 à force sur la tige de commande 10 grâce à un moletage 38′ sur la tige de commande 10, rendant le sertissage 38 optionnel.

A noter enfin que, en utilisant par exemple une clef d'arrêt basculante, l'invention permet d'ajuster la course morte du servomoteur après assemblage de ce dernier.

## Revendications

1. Servomoteur pneumatique d'assistance au freinage comportant en série une tige de commande (10) rendue substantiellement solidaire d'un plongeur (12) par un moyen de pivot (14), un disque de réaction (16) et une tige de poussée (18), la tige de commande (10) actionnant une valve à trois voies et deux sièges (24, 26), un espace déterminé étant ménagé au repos entre le disque de réaction (16) et le dit plongeur (12), caractérisé en ce que l'un (26) des deux sièges de la dite valve est constitué par l'extrémité d'un manchon (30) coaxial au dit plongeur (12), un moyen compressible précontraint (32) tendant à écarter l'un de l'autre axialement manchon (30) et plongeur (12), le dit manchon (30) venant axialement en butée sur une extrémité d'une pièce (36) rendue solidaire de la dite tige de commande (10) après ajustage des positions relatives.

2. Servomoteur pneumatique d'assistance au freinage selon la revendication 1, caractérisé en ce que le dit moyen compressible (32) est un ressort.

3. Servomoteur pneumatique d'assistance au freinage selon la revendication 1 ou 2, caractérisé en ce que les surfaces en butée du dit manchon (30) et de la dite pièce (36) affectent une forme partiellement sphérique sensiblement de même centre que celui du moyen de pivot (14).

4. Servomoteur pneumatique d'assistance au freinage selon la revendication 3, caractérisé en ce que le manchon (30) est disposé autour du plongeur (12).

5. Servomoteur pneumatique d'assistance au freinage selon la revendication 3, caractérisé en ce que le manchon (30) est disposé à l'intérieur du plongeur (12).

6. Servomoteur pneumatique d'assistance au freinage selon l'une quelconque des revendications précédentes, caractérisé en ce que la dite pièce (36) est sertie (38) sur la dite tige de commande (10).

7. Servomoteur pneumatique d'assistance au freinage selon l'une quelconque des revendications 1 à 5, caractérisé en ce que la dite pièce (36) est emmanchée à force sur la dite tige de commande (10).

8. Procédé de réglage du saut d'un servomoteur selon l'une quelconque des revendications précédentes, caractérisé en ce que :
- On dispose les dits deux sièges (24, 26) dans un plan radial par déplacement de la dite pièce (36) dont on fixe axialement la position ;
- On déplace axialement la dite tige de commande (10) pour obtenir le dit espace détermine ; et
- On rend solidaire la dite tige de commande (10) et la dite pièce (36).

9. Procédé de réglage du saut d'un servomoteur selon la revendication 8, caractérisé en ce que la dite tige de commande (10) et la dite pièce (36) sont rendues solidaires par sertissage (38).

## Claims

1. Pneumatic brake-booster comprising, in series, a control rod (10) substantially fixed to a plunger (12) by a pivot means (14), a reaction disk (16) and a push rod (18), the control rod (10) actuating a three-way valve with two seats (24, 26), a specific space being provided at rest between the reaction disk (16) and said plunger (12), characterized in that one (26) of the two seats of said valve consists of the end of a sleeve (30) arranged around said plunger (12), a prestressed compressible means (32) tending to shift the sleeve (30) and plunger (12) axially away from one another, said sleeve (30) coming axially up against one end of a piece (36) fixed to said control rod (10) after the relative positions have been set.

2. Pneumatic brake-booster according to claim 1, characterized in that said compressible means (32) is a spring.

3. Pneumatic brake-booster according to claim 1 or 2, characterized in that the surfaces up against one another of said sleeve (30) and of said piece (36) assume a partially spherical shape substantially of the same center as that of the pivot means (14).

4. Pneumatic brake booster according to claim 3, characterized in that the sleeve (30) is arranged around the plunger (12).

5. Pneumatic brake booster according to claim 3, characterized in that the sleeve (30) is arranged within the plunger (12).

6. Pneumatic brake-booster according to any of the preceding claims, characterized in that said piece (36) is crimped (38) onto said control rod (10).

7. Pneumatic brake booster according to anyone of claims 1 to 5, characterized in that said piece (36) is forced onto said control rod (10).

8. Process for adjusting the jump of a booster according to any of the preceding claims, characterized in that:
- said two seats (24, 26) are arranged in one radial plane as a result of the displacement of said piece (36), the position of which is fixed axially;
- said control rod (10) is displaced axially to obtain said specific space; and
- said control rod (10) and said piece (36) are fixed relative to one another.

9. Process for adjusting the jump of a booster according to claim 8, characterized in that said control rod (10) and said piece (36) are fixed relative to one another by crimping (38).

## Patentansprüche

1. Pneumatischer Bremskraftverstärker, nacheinander aufweisend: eine Steuerstange (10), die durch ein Schwenkmittel (14) im wesentlichen mit einem Kolben (12) fest verbunden ist, eine Gegendruckscheibe (16) und eine Schubstange (18), wobei die Steuerstange (10) ein Dreiwegeventil und zwei Sitze (24, 26) betätigt, wobei zwischen der Gegendruckscheibe (16) und dem Kolben (12) ein bestimmter Raum vorgesehen ist, dadurch gekennzeichnet, daß einer (26) der beiden Sitze des Ventils durch das Ende einer zu dem Kolben (12) koaxialen Hülse (30) gebildet ist, wobei ein vorbelastetes zusammendrückbares Mittel (32) dazu neigt, die Hülse (30) und den Kolben (12 voneinander zu entfernen, wobei die Hülse (30) axial in Anlage an einem Ende eines Teils (36) gelangt, das mit der Steuerstange (10) fest verbunden ist, nachdem die Relativpositionen eingestellt worden sind.

2. Pneumatischer Bremskraftverstärker nach Anspruch 1, dadurch gekennzeichnet, daß das zusammendrückbare Mittel (32) eine Feder ist.

3. Pneumatischer Bremskraftverstärker nach Anspruch 1 oder 2, dadurch gekennzeichnet, daß die Anschlagflächen der Hülse (30) und des Teils (36) eine teilweise kugelförmige Form mit im wesentlichen dem gleichen Zentrum wie demjenigen des Schwenkmittels (14) annehmen.

4. Pneumatischer Bremskraftverstärker nach Anspruch 3, dadurch gekennzeichnet, daß die Hülse (30) um den Kolben (12) angeordnet ist.

5. Pneumatischer Bremskraftverstärker nach Anspruch 3, dadurch gekennzeichnet, daß die Hülse (30) im Inneren des Kolbens (12) angeordnet ist.

6. Pneumatischer Bremskraftverstärker nach einem der vorhergehenden Ansprüche, dadurch gekennzeichnet, daß das Teil (36) auf die Steuerstange (10) gebördelt ist.

7. Pneumatischer Bremskraftverstärker nach einem der Ansprüche 1 bis 5, dadurch gekennzeichnet, daß das Teil (36) mit Kraft auf die Steuerstange (10) gesetzt ist.

8. Verfahren zur Einstellung des Schwellenwertes eines Verstärkers nach einem der vorhergehenden Ansprüche, dadurch gekennzeichnet, daß:
- die beiden Sitze (24, 26) durch Verschiebung des Teils (36), dessen Position axial fixiert wird, in einer radialen Ebene angeordnet werden;
- die Steuerstange (10) axial verschoben wird, um den bestimmten Raum zu erhalten; und
- die Steuerstange (10) und das Teil (36) fest miteinander verbunden werden.

9. Verfahren zur Einstellung des Schwellenwertes eines Verstärkers nach Anspruch 8, dadurch gekennzeichnet, daß die Steuerstange (10) und das Teil (36) durch Bördelung (38) fest miteinander verbunden sind.
